# EUROPÄISCHE PATENTSCHRIFT

(11) **EP 0 689 924 B1**
(45) Veröffentlichungstag und Bekanntmachung des Hinweises auf die Patenterteilung: **16.12.1998**
(21) Anmeldenummer: 95108845.9
(22) Anmeldetag: 08.06.1995
(51) Int. Cl.: B29C 45/67, B29C 45/17

(54) **Holmlose Schliesseinheit für eine Machine für die Verarbeitung von spritzgiessfähigem Material**
Tiebarless clamping unit for a machine processing material suitable for injection molding
Unité de fermeture sans colonnes pour une machine destinée à la transformation de matière injectables

(30) Priorität: 29.06.1994 AT 1275/94
(43) Veröffentlichungstag der Anmeldung: 03.01.1996
(73) Patentinhaber: Battenfeld Kunststoffmaschinen Ges.m.b.H., A-2542 Kottingbrunn (AT)
(72) Erfinder: Bleier, Harald, A-2700 Wiener Neustadt (AT); Müssler, Richard, A-7035 Steinbrunn (AT)
(74) Vertreter: Gosdin, Michael, Dr.

(56) Entgegenhaltungen:
- WO-A-94/17977
- DE-B- 1 203 449
- DE-U- 9 212 480
- US-A- 3 833 333

## Beschreibung

Die Erfindung bezieht sich auf eine holmlose Schließeinheit für eine Maschine für die Verarbeitung von spritzgießfähigem Material, insbesondere für eine Kunststoff-Spritzgießmaschine.

Eine holmlose Schließeinheit ist aus der EP 0 554 068 A1 bekannt. Das Kraftübertragungselement, das im wesentlichen aus dem Maschinenrahmen gebildet wird, überträgt hier die Schließkraft eines hydraulischen Krafterzeugungselements, welches die Schließkraft erzeugt. Das Spritzgießwerkzeug ist zwischen zwei Werkzeugträgerplatten gespannt. Dabei ist die eine Trägerplatte in Schließrichtung des Werkzeugs verschiebbar auf einem geeigneten Führungselement angeordnet. Des weiteren ist eine Stirnplatte vorhanden, wobei diese mit dem Maschinenrahmen fest verbunden ist. Zwischen dieser Stirnplatte und der einen Werkzeugträgerplatte wirkt das Krafterzeugungselement.

Eine andere holmlose Maschinenkonzeption ist aus der WO 94/17977 (Stand der Technik gemäß Art. 54(3) EPÜ) bekannt. Dort wird eine Spritzgießmaschine mit einem Maschinenrahmen beschrieben und mit je einer ortsfesten sowie hydraulisch oder elektromechanisch bewegbaren Formaufspannplatte, die so ausgebildet ist, daß zur weitgehenden Kompensation des beim Formschluß auftretenden, den Maschinenrahmen verformenden Biegemomentes neben einem die bewegbare Formaufspannplatte betätigenden antreibbaren Kraftorgan ein weiteres antreibbares Kraftorgan in kraftsymmetrischer Anordnung zu dem ersten vorgesehen ist. Dieses weitere Kraftorgan wird gleichzeitig mit einer der von dem ersten Kraftorgan bewirkten Schließkraft entsprechenden bzw. proportionalen Kraft beaufschlagt.

Die bekannten Konzeptionen haben eine Reihe von Nachteilen zur Folge: Insbesondere bei der Lösung nach der EP 0 554 068 A1 ist die Zugänglichkeit zu einer Werkstuck-Auswerfereinheit, die das spritzgegossene Teil nach dem Auskühlen aus dem geöffneten Werkzeug auswirft, schlecht, da sich an dieser Stelle das Krafterzeugungselement befindet. Weiterhin können Abschraubeinrichtungen nur mit erheblichem Mehraufwand realisiert werden. Soll der Öffnungshub des Werkzeugs z. B. bei Fertigung eines anderen Spritzgießteils verlängert werden, ist dies nur in Verbindung mit der Erweiterung des Maschinenrahmens möglich. Dadurch, daß ein relativ langer Maschinenrahmen, insbesondere bei großem Öffnungshub des Werkzeugs, verwendet werden muß, ist ein hohes Gewicht der Spritzgießmaschine gegeben.

Der vorliegenden Erfindung liegt daher die **Aufgabe** zugrunde, eine Konzeption für eine holmlose Schließeinheit zu schaffen, die die genannten Nachteile verhindert und so zu einer einfacheren Bauart führt.

Die **Lösung** der Aufgabe durch die Erfindung ist durch die Merkmalskombinationen nach den Ansprüchen 1 und 2 gekennzeichnet.

Vor dem Aufbringen der Schließkraft durch das Element zur Erzeugung der Schließkraft wird bei der Lösung nach Anspruch 1 also der Verbund von Stirnplatte (6), Werkzeugträgerplatte (3) und einer Werkzeughälfte (4) zusammen mit dem sich im Regelfall dazwischen befindlichen Schließkrafterzeugungselement (7) durch ein Bewegungselement (8) in die Schließposition des Werkzeugs gebracht. Dann wird die Stirnplatte (6) mittels geeigneter Verriegelungselemente (9) relativ zum Kraftübertragungselement (1) verriegelt. Dann erst wird die Schließkraft auf das Werkzeug (4, 5) aufgebracht.Dabei erfolgt die Führung der beiden Werkzeugträgerplatten (2, 3) zueinander durch mindestens ein Führungselement (10), wobei sich mindestens eine Werkzeugträgerplatte (3) in Schließrichtung auf dem Führungselement (10) bewegen kann und wobei das Führungselement (10) relativ zum Kraftübertragungselement (1) derart gelagert ist, daß es sich durch die Schließkraft nicht mit verformt.

Alternativ zu dieser Ausführungsform ist eine analoge Konzeption möglich, bei der das Element zur Erzeugung der Schließkraft (7) nicht zwischen Stirn- und zweiter Werkzeugträgerplatte (6, 3), sondern direkt zwischen dem Kraftübertragungselement (1) und der ersten Werkzeugträgerplatte (2) angeordnet ist. Unter Verzicht auf die Stirnplatte (6) wird dadurch eine noch einfachere Bauform möglich. In diesem Falle wird die erfindungsgemäße Idee dadurch realisiert, daß die zweite Werkzeugträgerplatte (3) vor Aufbringung der Schließkraft relativ zum Kraftübertragungselement (1) mittels mindestens einem Verriegelungselement (9) verriegelt wird.

Vorteilhafterweise führt die erfindungsgemäße Lösung zu einer kürzeren Rahmenbauform, da nicht der Platzbedarf für die Krafterzeugungseinheit besteht wie bei der bekannten Lösung. Dies führt direkt zu Gewichts- und Kostenersparnis. Da das Kraftübertragungselement (Maschinenrahmen) recht kompakt ausgeführt werden kann, ist eine kostengünstige Konzeption möglich. Durch diese Kompaktbauart sind auch nur geringere Verformungen der Maschine beim Aufbringen der Schließkraft gegeben.

Da nunmehr eine freie Zugänglichkeit im Bereich der Werkstück-Auswerfereinheit gegeben ist, sind Sonderapplikationen ohne hohen Aufwand realisierbar. Soll der Öffnunghub des Werkzeugs variiert werden, ist dies nunmehr ohne großen Aufwand machbar.

Weiterhin hat die jetzt kürzere Baulänge der Maschine den Vorteil, daß die Spritzgießmaschine eine Kleinere Stellfläche benötigt als konventionelle Maschinen.

Wird die zweite aufgeführte Bauform (ohne Stirnplatte (6)) ins Auge gefaßt, verkürzt sich die Rahmenlänge weiterhin mit den obengenannten Vorteilen.

Eine vorteilhafte Weiterbildung besteht darin, daß das Element zur Erzeugung der Schließkraft (7) nur eine kurzhubige Bewegung ausführt. Die Baulänge der Maschine kann so minimiert werden.

Weiterhin wird zwecks Erhalt einer hohen Arbeitsgenauigkeit der Spritzgießmaschine nach Anspruch 2 die Fuhrung der beiden Werkzeugträgerplatten (2, 3) zueinander durch mindestens ein Führungselement (10) bewerkstelligt, wobei sich mindestens eine Werkzeugträgerplatte (3) in Schließrichtung auf dem Führungselement (10) bewegen kann und wobei das Führungselement (10) relativ zum Kraftübertragungselement (1) derart gelagert ist, daß es sich durch die Schließkraft nicht mit verformt. Durch die Lagerung des Führungselements für die Werkzeugträgerplatten wird also sichergestellt, daß schließkraftbedingte Verformungen des Maschinenrahmens das Führungselement nicht mit Biegemomenten beaufschlagt.

Die Verschiebung der Stirnplatte (6) zusammen mit der zweiten Werkzeugträgerplatte (3) bzw. der zweiten Werkzeugträgerplatte (3) in Schließrichtung kann durch hydraulische oder elektrische Mittel erfolgen, genauso wie die Verriegelung der Stirnplatte (6) bzw. der zweiten Werkzeugträgerplatte (3) relativ zum Kraftübertragungselement (1).

Für die Maschinenbelastung in vorteilhafter Weise kann das Verriegelungselement (9) so ausgebildet sein, daß es nur Kräfte in Schließrichtung des Werkzeugs überträgt.

Das Element zur Erzeugung der Schließkraft (7) kann ein hydraulisches, elektrisches oder piezoelektrisches Krafterzeugungselement sein. Vorzugsweise kommt ein Druckkissen zum Einsatz.

In der Zeichnung sind zwei erfindungsgemäße Ausführungformen dargestellt.
- Fig. 1: zeigt die Vorderansicht der erfindungsgemäßen holmlosen Schließeinheit,

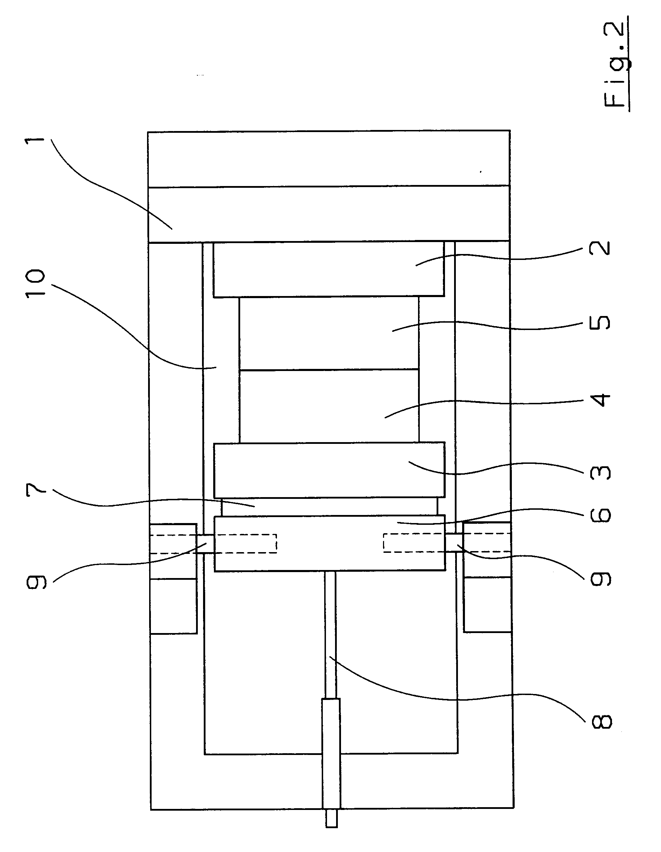

- Fig. 2: stellt die zu Fig. 1 zugehörige Draufsicht dar, und in
- Fig. 3: ist eine modifizierte Schließeinheit in der Vorderansicht dargestellt.

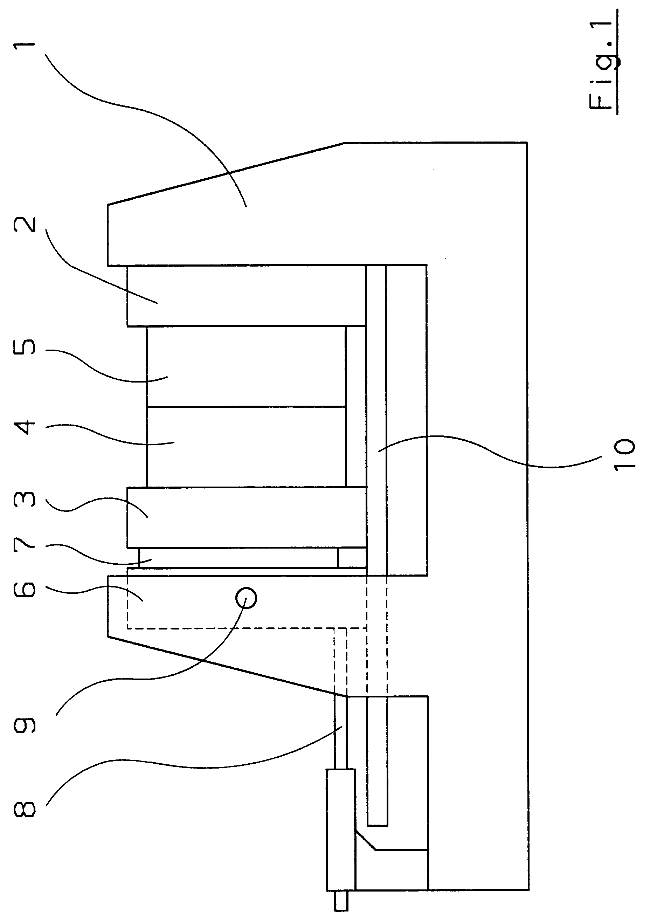

In Fig. 1 ist eine holmlose Schließeinheit zu sehen. Sie besteht aus einem C-Rahmen-förmigen Kraftübertragungselement 1. Ein Spritzgießwerkzeug 4, 5 wird von zwei Werkzeugträgerplatten 2 und 3 gehalten. Die zweite Werkzeugträgerplatte 3 steht über ein Element zur Erzeugung der Werkzeugschließkraft 7 in Verbindung mit einer Stirnplatte 6. Werkzeugträger- und Stirnplatte 3 und 6 können sich im Verbund - zusammen mit der dazwischenliegenden Krafterzeugungseinheit 7 in Schließrichtung des Werkzeugs 4, 5 bewegen. Hierzu sind sie verschiebbar auf einem Führungselement 10 angeordnet. Für die Stell-Bewegung ist ein Bewegungselement 8 vorgesehen.

Für die Herstellung eines Spritzgießteils wird zunächst das Werkzeug 4, 5 geschlossen. Das Bewegungselement 8 verschiebt daher die zweite Werkzeugträgerplatte 3 mit einer Werkzeughälfte 4 zusammen mit der Stirnplatte 6 und dem Krafterzeugungselement 7 in die Geschlossen-Position des Werkzeugs. Hierbei führt das Bewegungselement 8 in der Regel eine langhubige Bewegung aus. Dann wird mittels eines Verriegelungselement 9 die Stirnplatte 6 mit dem Kraftübertragungselement 1 verriegelt. Im skizzierten Fall wird ein Verriegelungselement in Form zweier Bolzen eingesetzt, die in der Schließstellung des Werkzeugs durch entsprechende Bohrungen in Stirnplatte 6 und Kraftübertragungselement 1 geschoben werden. Zum Einsatz können jedoch alle denkbaren Verriegelungselemente kommen, sofern sie sicherstellen, daß sich in der verriegelten Stellung die Stirnplatte 6 nicht mehr in Schließrichtung des Werkzeugs relativ zum Kraftübertragungselement bewegen kann.

Der Verriegelungsvorgang wird durch die Steuerung der Spritzgießmaschine veranlaßt, er findet also automatisiert statt, so daß kein manueller Eingriff notwendig ist.

Dann wird die Schließkraft durch das Element 7 erzeugt. Bei diesem Element handelt es sich vorzugsweise um ein Bauteil, das nur eine kurzhubige Bewegung ausführen kann. Da sich bei Beginn des Aufbringens der Kraft die Form jedoch schon in der Geschlossen-Position befindet, reicht der geringe Hub aus, um eine genügend hohe Schließkraft zu erzeugen. Wegen des kleinen Hubes des Elements 7 kommt neben hydraulischen oder elektrischen Maschinenelementen ggf. auch ein piezoelektrisches in Frage.

Die Lagerung des Führungselements 10 im Kraftübertragungselement (Maschinenrahmen) 1 ist so bewerkstelligt, daß keine Biegemomente - resultierend aus schließkraftbedingten Verformungen der Spritzgießmaschine - auf das Element 10 einwirken können. Dies wird z. B. durch spielbehaftete Lagerung des Führungselements 10 im Rahmen 1 sichergestellt. Weiterhin ist das Verriegelungselement 9 so beschaffen, daß Kräfte nur in Schließrichtung des Werkzeugs übertragen werden können. Hierdurch wird erreicht, daß von da her keine Kräfte und Momente eingeleitet werden können die zu zusätzlichen Verformungen führen.

Sowohl für die Bewegung der Stirn- und Werkzeugträgerplatte 6 und 3 als auch für die Verriegelung der Stirnplatte 6 mit dem Kraftübertragungselement 1 kommen z. B. hydraulische oder elektrische Mittel in Betracht.

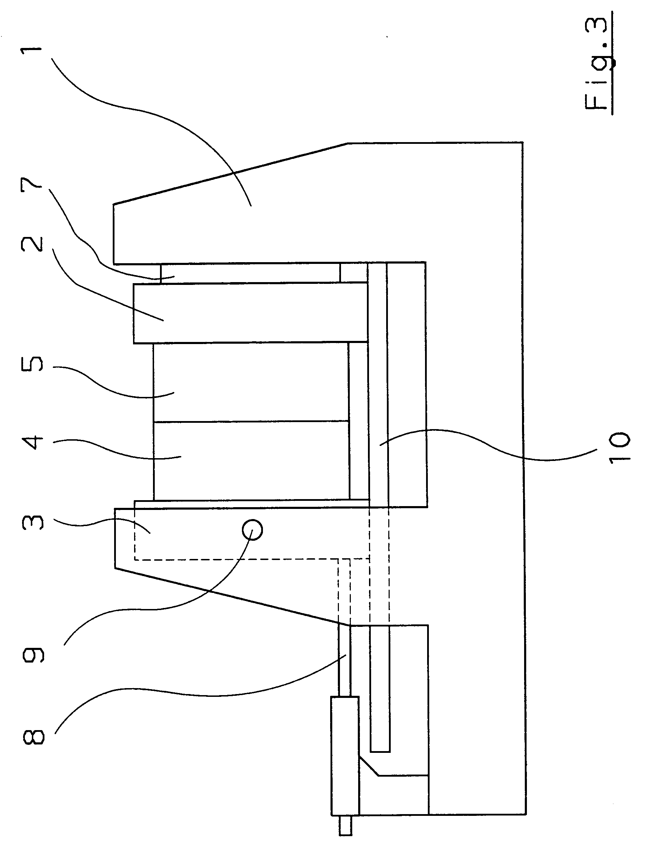

In Fig. 3 ist eine modifizierte Bauart der erfindunggemäßen Schließeinheit dargestellt. Der Aufbau ist weitgehend gleich mit dem der Schleißeinheit in Fig. 1. Die Einheit besteht wieder aus einem C-Rahmen-förmigen Kraftübertragungselement 1. Das Werkzeug 4, 5 wird wieder von zwei Werkzeugträgerplatten 2 und 3 gehalten.

Jetzt steht jedoch die erste Werkzeugträgerplatte 2 über das Element zur Erzeugung der Schließkraft 7 in Verbindung mit dem Rahmen 1. Die zweite Werkzeugträgerplatte 3 kann sich zusammen mit der zweiten Werkzeughälfte 4 in Schließrichtung des Werkzeugs 4, 5 bewegen. Hierzu ist sie verschiebbar auf einem Führungselement 10 angeordnet. Für die Stell-Bewegung ist wieder das Bewegungselement 8 vorgesehen.

Für die Herstellung eines Teils wird jetzt zunächst wieder das Werkzeug 4, 5 geschlossen. Das Bewegungselement 8 verschiebt daher die zweite Werkzeugträgerplatte 3 mit der zweiten Werkzeughälfte 4 in die Geschlossen-Position des Werkzeugs. Hierbei führt das Bewegungselement 8 wieder eine langhubige Bewegung aus. Dann wird mittels eines Verriegelungselements 9 direkt die zweite Werkzeugträgerplatte 3 mit dem Kraftübertragungselement 1 verriegelt. Dann wird die Schließkraft durch das Element 7 erzeugt.

### Bezugszeichenliste:

- 1: Krafübertragungselement
- 2: erste Werkzeugträgerplatte
- 3: zweite Werkzeugträgerplatte
- 4: erste Hälfte des Werkzeugs
- 5: zweite Hälfte des Werkzeugs
- 6: Stirnplatte
- 7: Element zur Erzeugung der Schließkraft
- 8: Bewegungselement
- 9: Verriegelungselement
- 10: Führungselement

## Patentansprüche

1. Holmlose Schließeinheit für eine Maschine für die Verarbeitung von spritzgießfähigem Material, insbesondere für eine Kunststoff-Spritzgießmaschine, die aufweist:
- mindestens ein die Schließkraft übertragendes Kraftübertragungselement (1),
- eine erste am Kraftübertragungselement (1) angeordnete Werkzeugträgerplatte (2),
- eine zweite Werkzeugträgerplatte (3), die zum Öffnen und Schließen des Werkzeugs (4, 5) in Schließrichtung des Werkzeugs verschiebbar ist,
- eine Stirnplatte (6),
- ein aus mindestens zwei Teilen bestehendes Werkzeug (4, 5), von dem jeweils eines an der ersten und an der zweiten Werkzeugträgerplatte (2, 3) angeordnet ist,
- mindestens ein Element zur Erzeugung einer Schließkraft (7), das vorzugsweise zwischen der Stirnplatte (6) und der zweiten Werkzeugträgerplatte (3) angeordnet ist,
wobei
- die zweite Werkzeugträgerplatte (3) zusammen mit der Stirnplatte (6) in Schließrichtung des Werkzeugs (4, 5) vor Aufbringung der Schließkraft, insbesondere mit einem Bewegungselement (8), das eine langhubige Stellbewegung der Stirn- und Werkzeugträgerplatte (6, 3) ermöglicht, verschiebbar ist,
- die bewegliche Stirnplatte (6) vor Aufbringung der Schließkraft relativ zum Kraftübertragungselement (1) mittels mindestens eines Verriegelungselements (9) verriegelt wird und wobei
- die Führung der beiden Werkzeugträgerplatten (2, 3) zueinander durch mindestens ein Führungselement (10) erfolgt, wobei sich mindestens eine Werkzeugträgerplatte (3) in Schließrichtung auf dem Führungselement (10) bewegen kann und wobei das Führungselement (10) relativ zum Kraftübertragungselement (1) derart gelagert ist, daß es sich durch die Schließkraft nicht mit verformt.

2. Holmlose Schließeinheit für eine Maschine für die Verarbeitung von spritzgießfähigem Material, insbesondere für eine Kunststoff-Spritzgießmaschine, die aufweist:
- mindestens ein die Schließkraft übertragendes Kraftübertragungselement (1),
- eine erste verschiebbare Werkzeugträgerplatte (2),
- eine zweite Werkzeugträgerplatte (3), die zum Öffnen und Schließen des Werkzeugs (4, 5) in Schließrichtung des Werkzeugs verschiebbar ist,
- ein aus mindestens zwei Teilen bestehendes Werkzeug (4, 5), von dem jeweils eines an der ersten und an der zweiten Werkzeugträgerplatte (2, 3) angeordnet ist,
- mindestens ein Element zur Erzeugung einer Schließkraft (7), das vorzugsweise zwischen dem Kraftübertragungselement (1) und der ersten Werkzeugträgerplatte (2) angeordnet ist,
wobei
- die zweite Werkzeugträgerplatte (3) in Schließrichtung des Werkzeugs (4, 5) vor Aufbringung der Schließkraft, insbesondere mit einem Bewegungselement (8), das eine langhubige Stellbewegung der Werkzeugträgerplatte (3) ermöglicht, verschiebbar ist und wobei
- die zweite Werkzeugträgerplatte (3) vor Aufbringung der Schließkraft relativ zum Kraftübertragungselement (1) mittels mindestens eines Verriegelungselements (9) verriegelt wird.

3. Schließeinheit nach Anspruch 1 oder 2, dadurch gekennzeichnet, daß das Element zur Erzeugung der Schließkraft (7) nur eine kurzhubige Bewegung ausführt.

4. Schließeinheit nach Anspruch 2 oder 3, dadurch gekennzeichnet, daß die Führung der beiden Werkzeugträgerplatten (2, 3) zueinander durch mindestens ein Führungselement (10) erfolgt, wobei sich mindestens eine Werkzeugträgerplatte (3) in Schließrichtung auf dem Führungselement (10) bewegen kann und wobei das Führungselement (10) relativ zum Kraftübertragungselement (1) derart gelagert ist, daß es sich durch die Schließkraft nicht mit verformt.

5. Schließeinheit nach mindestens einem der Ansprüche 1 bis 4, dadurch gekennzeichnet, daß die Verschiebung der Stirnplatte (6) zusammen mit der zweiten Werkzeugträgerplatte (3) bzw. der zweiten Werkzeugträgerplatte (3) in Schließrichtung durch hydraulische oder elektrische Mittel erfolgt.

6. Schließeinheit nach mindestens einem der Ansprüche 1 bis 5, dadurch gekennzeichnet, daß die Verriegelung der Stirnplatte (6) bzw. der zweiten Werkzeugträgerplatte (3) relativ zum Kraftübertragungselement (1) auf hydraulischem oder elektrischem Wege erfolgt.

7. Schließeinheit nach mindestens einem der Ansprüche 1 bis 6, dadurch gekennzeichnet, daß das Verriegelungselement (9) nur Kräfte in Schließrichtung des Werkzeugs überträgt.

8. Schließeinheit nach mindestens einem der Ansprüche 1 bis 7, dadurch gekennzeichnet, daß das Element zur Erzeugung der Schließkraft (7) ein hydraulisches, elektrisches oder piezoelektrisches Krafterzeugungselement ist.

9. Schließeinheit nach mindestens einem der Ansprüche 1 bis 8, dadurch gekennzeichnet, daß das Element zur Erzeugung der Schließkraft (7) als Druckkissen ausgebildet ist.

## Claims

1. Closure unit without tie bar for a machine for processing injection-mouldable material, particularly for a plastic injection moulding machine which has:
- at least one force-transmission element (1) transmitting the closing force,
- a first mould support plate (2) arranged on the force-transmission element (1),
- a second mould support plate (3) which can be displaced in the closing direction of the mould to open and close the mould (4, 5),
- a front plate (6),
- a mould (4, 5) comprising at least two parts, of which one is arranged on the first and one on the second mould support plate (2, 3),
- at least one element to produce a closing force (7) which is preferably arranged between the front plate (6) and the second mould support plate (3),
wherein
- the second mould support plate (3) together with the front plate (6) can be displaced in the closing direction of the mould (4, 5) before applying the closing force, particularly using a moving part (8) which facilitates long-stroke adjusting movement of the front plate and mould support plate (6, 3),
- the movable front plate (6) is locked before applying the closing force relative to the force-transmission element (1) by means of at least one locking element (9), and wherein
- the two mould support plates (2, 3) are guided with respect to one another by means of at least one guide element (10), wherein at least one mould support plate (3) may be moved in the closing direction on the guide element (10) and wherein the guide element (10) is mounted relative to the force-transmission element (1) such that it is not also deformed by the closing force.

2. Closure unit without tie bar for a machine for processing injection-mouldable material, particularly for a plastic injection moulding machine which has:
- at least one force-transmission element (1) transmitting the closing force,
- a first displaceable mould support plate (2),
- a second mould support plate (3) which can be displaced in the closing direction of the mould to open and close the mould (4, 5),
- a mould (4, 5) comprising at least two parts, of which one is arranged on the first and one on the second mould support plate (2, 3),
- at least one element to produce a closing force (7) which is preferably arranged between the force-transmission element (1) and the first mould support plate (2),
wherein
- the second mould support plate (3) can be displaced in the closing direction of the mould (4, 5) before applying the closing force, particularly using a moving part (8) which facilitates long-stroke adjusting movement of the mould support plate (3), and wherein
- the second mould support plate (3) is locked before applying the closing force relative to the force-transmission element (1) by means of at least one locking element (9).

3. Closure unit according to claim 1 or 2, characterised in that the element for producing the closing force (7) only executes a short-stroke movement.

4. Closure unit according to claim 2 or 3, characterised in that the two mould support plates (2, 3) are guided with respect to one another by means of at least one guide element (10), wherein at least one mould support plate (3) may be moved in the closing direction on the guide element (10) and wherein the guide element (10) is mounted relative to the force-transmission element (1) such that it is not also deformed by the closing force.

5. Closure unit according to at least one of claims 1 to 4, characterised in that the front plate (6) together with the second mould support plate (3) or the second mould support plate (3) is displaced in the closing direction by hydraulic or electrical means.

6. Closure unit according to at least one of claims 1 to 5, characterised in that the front plate (6) or the second mould support plate (3) is locked relative to the force-transmission element (1) by hydraulic or electrical means.

7. Closure unit according to at least one of claims 1 to 6, characterised in that the locking element (9) only transmits forces in the closing direction of the mould.

8. Closure unit according to at least one of claims 1 to 7, characterised in that the element for producing the closing force (7) is a hydraulic, electrical or piezoelectric force-producing element.

9. Closure unit according to at least one of claims 1 to 8, characterised in that the element for producing the closing force (7) is designed as a pressure pad.

## Revendications

1. Bloc de fermeture sans longeron pour une machine pour la transformation de matière moulable par injection, en particulier pour une machine de moulage par injection des plastiques, qui présente :
- au moins un élément transmetteur de force (1) qui transmet la force de fermeture,
- une première plaque porte-moule (2) placée sur cet élément transmetteur de force (1),
- une deuxième plaque porte-moule (3) qui est mobile pour l'ouverture et la fermeture du moule (4, 5) dans la direction de fermeture de celui-ci,
- une plaque frontale (6),
- un moule (4, 5) constitué d'au moins deux parties dont une est placée sur la première plaque porte-moule (2) et une autre placée sur la deuxième plaque porte-moule (3),
- au moins un élément pour la production d'une force de fermeture (7) qui est placé de préférence entre la plaque frontale (6) et la deuxième plaque porte-moule (3),
dans lequel
- la deuxième plaque porte-moule (3) peut être déplacée conjointement avec la plaque frontale (6) dans la direction de fermeture du moule (4, 5) avant l'application de la force de fermeture, en particulier par un élément de mouvement (8) qui permet un mouvement de positionnement à longue course des plaques frontale et porte-moule (6, 3),
- la plaque frontale mobile (6) est, avant l'application de la force de fermeture, verrouillée par rapport à l'élément transmetteur de force (1) au moyen d'au moins un élément de verrouillage (9) et
- le guidage des deux plaques porte-moule (2, 3) l'une par rapport à l'autre est produit par au moins un élément de guidage (10), au moins une plaque porte-moule (3) pouvant se déplacer dans la direction de fermeture sur l'élément de guidage (10) et l'élément de guidage (10) étant monté par rapport à l'élément transmetteur de force (1) de façon à ne pas se déformer avec celui-ci par la force de fermeture.

2. Bloc de fermeture sans longeron pour une machine pour la transformation de matière moulable par injection, en particulier pour une machine de moulage par injection des plastiques, qui présente :
- au moins un élément transmetteur de force (1) qui transmet la force de fermeture,
- une première plaque porte-moule mobile (2),
- une deuxième plaque porte-moule (3) qui est mobile pour l'ouverture et la fermeture du moule (4, 5) dans la direction de fermeture de celui-ci,
- un moule (4, 5) constitué d'au moins deux parties dont une est placée sur la première plaque porte-moule (2) et une autre placée sur la deuxième plaque porte-moule (3),
- au moins un élément pour la production d'une force de fermeture (7) qui est placé de préférence entre l'élément transmetteur de force (1) et la première plaque porte-moule (2),
dans lequel
- la deuxième plaque porte-moule (3) peut être déplacée dans la direction de fermeture du moule (4, 5) avant l'application de la force de fermeture, en particulier par un élément de mouvement (8) qui permet un mouvement de positionnement à longue course de la plaque porte-moule (3), et
- la deuxième plaque porte-moule (3) est, avant l'application de la force de fermeture, verrouillée par rapport à l'élément transmetteur de force (1) au moyen d'au moins un élément de verrouillage (9).

3. Bloc de fermeture selon l'une des revendications 1 et 2, caractérisé par le fait que l'élément pour la production de la force de fermeture (7) exécute seulement un mouvement à courte course.

4. Bloc de fermeture selon l'une des revendications 2 et 3, caractérisé par le fait que le guidage des deux plaques porte-moule (2, 3) l'une par rapport à l'autre est produit par au moins un élément de guidage (10), au moins une plaque porte-moule (3) pouvant se déplacer dans la direction de fermeture sur cet élément de guidage (10) et l'élément de guidage (10) étant monté par rapport à l'élément transmetteur de force (1) de façon à ne pas se déformer avec celui-ci par la force de fermeture.

5. Bloc de fermeture selon au moins une des revendications 1 à 4, caractérisé par le fait que le déplacement de la plaque frontale (6) conjointement avec la deuxième plaque porte-moule (3) ou de la deuxième plaque porte-moule (3) dans la direction de fermeture est produit par des moyens hydrauliques ou électriques.

6. Bloc de fermeture selon au moins une des revendications 1 à 5, caractérisé par le fait que le verrouillage de la plaque frontale (6) ou de la deuxième plaque porte-moule (3) par rapport à l'élément transmetteur de force (1) est produit par voie hydraulique ou électrique.

7. Bloc de fermeture selon au moins une des revendications 1 à 6, caractérisé par le fait que l'élément de verrouillage (9) ne transmet que des forces dans la direction de fermeture du moule.

8. Bloc de fermeture selon au moins une des revendications 1 à 7, caractérisé par le fait que l'élément pour la production de la force de fermeture (7) est un élément générateur de force hydraulique, électrique ou piézoélectrique.

9. Bloc de fermeture selon au moins une des revendications 1 à 8, caractérisé par le fait que l'élément pour la production de la force de fermeture (7) est constitué d'un coussin de pression.
